Europäisches Patentamt

European Patent Office

Office européen des brevets

(19)

(11) **EP 1 217 242 A2**

(12) # EUROPEAN PATENT APPLICATION

(43) Date of publication:
26.06.2002 Bulletin 2002/26

(51) Int Cl.7: **F16D 48/06**, B60K 41/02,
B60K 41/28, B60K 23/02

(21) Application number: 01128737.2

(22) Date of filing: 03.12.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 20.12.2000 JP 2000387448

(71) Applicants:
• **TOYOTA JIDOSHA KABUSHIKI KAISHA
Aichi-ken 471-8571 (JP)**
• **Bosch Automotive Systems Corporation
Tokyo 150-0002 (JP)**

(72) Inventors:
• **Kibe, Kazuya
Toyota-shi, Aichi-ken, 471-8571 (JP)**

• **Mori, Osamu c/o Bosch Automotive Syst.Corp.
Tokyo 150-0002 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

Remarks:
A request for correction by means of addition of a
missing page of the description has been filed
pursuant to Rule 88 EPC. A decision on the request
will be taken during the proceedings before the
Examining Division (Guidelines for Examination in
the EPO, A-V, 3.).

(54) **Apparatus for determining operating state of clutch of vehicle, and engine controller
equipped with the apparatus**

(57) An apparatus for determining an operating
state of a clutch (14) of a vehicle, including: (a) a clutch
switch (64) for detecting an amount of operation of a
clutch pedal (60), (b) clutch-pedal-operation determining means (112, S1) for determining whether the clutch
pedal has been operated, on the basis of an output signal provided by the clutch switch; (c) accelerator-pedal-
non-operation determining means (114, S5) for determining whether an accelerator pedal (94) is placed in its
non-operated state; (d) low-engine-speed determining
means (116, S3) for determining whether an operating
speed ($N_E$) of an engine (12) of the vehicle is equal to
or lower than a predetermined speed threshold ($N_{E1}$);
and (e) clutch-state determining means (124, S7, S9)
for determining that the clutch is placed in its engaged
state if a predetermined condition is satisfied when it is
determined by the clutch-pedal-operation determining
means that the clutch pedal has been operated, wherein
the predetermined condition includes at least an affirmative determination by the accelerator-pedal-non-operation determining means that the accelerator pedal is
placed in the non-operated state and an affirmative determination by the low-engine-speed determining
means that the operating speed of the engine is equal
to or lower than the predetermined speed threshold.

FIG. 4

EP 1 217 242 A2

**Description**

BACKGROUND OF THE INVENTION

Field of the Invention

The present invention relates in general to an apparatus for determining an operating state of a clutch provided in a motor vehicle, on the basis of an output signal of a clutch switch of the vehicle, and also to an engine controller equipped with the apparatus.

Discussion of the Related Art

There is known a motor vehicle equipped with a clutch operable to selectively connect and disconnect a drive power source and a transmission to and from each other. One type of such a motor vehicle is disclosed in JP-A-10-184728 (publication of unexamined Japanese Patent Application laid open in 1998), wherein the clutch is controlled to be selectively placed in its engaged and released states on the basis of an output signal of a clutch sensor which detects an operation of a clutch pedal, for selective connection and disconnection between the drive power source and the transmission

There is a case where the operating state of the clutch has to be determined by the clutch switch, for executing a required control program. However, a moment of switching action of the clutch switch between its ON and OFF states does not necessarily coincide with a moment of switching action of the clutch between its engaged and released states, since the clutch switch is commonly adapted to be turned on or off at a moment of initiation of depression of the clutch pedal, or at a moment of completion of depression of the clutch pedal. In other words, the signal provided by the clutch switch can not accurately represent the actual operating state of the clutch, thereby making it difficult to carry out the control program on the basis of the signal of the clutch switch, and causing a problem that the vehicle suffers from a problematic surging or shock acting on its body.

For example, in an electronically-controlled fuel supplying device for controlling a quantity of fuel which is to be directly injected into cylinders of a direct-injection type engine such as a diesel engine and a lean-burn engine, a so-called fuel-injection-quantity gradual-change or smooth-change control is executed when the clutch is placed in its engaged state, so as to gradually or smoothly increase or reduce the quantity of the injected fuel with a certain degree of delay with respect to an increase or reduction in an amount of operation of an accelerator pedal while the clutch is placed in its engaged state. That is, in the fuel-injection-quantity gradual-change control, the changing of the quantity of the injected fuel is somewhat delayed with respect to the changing of the amount of operation of the accelerator pedal, and the quantity of the injected fuel is changed in a gradual manner, in the interest of alleviating a shock due to an abrupt acceleration or deceleration of the vehicle. However, such a fuel-injection-quantity gradual-change control might be executed even when the clutch is actually placed in its released state, or might fail to be executed when the clutch is actually placed in its engaged state, since the switching point of the clutch switch from one of the ON and OFF states to the other does not necessarily coincide with the transition or switching point of the clutch from one of the engaged and released states to the other. If such a control is erroneously executed when the clutch is placed in its released state for achieving a gear shift operation in which a desired operating speed of the engine should be established in response to an operation amount of the accelerator pedal, the desired operating speed of the engine is not likely to be established in the released state of the clutch. Further, such a control might be erroneously executed when the clutch is placed in its released state with the accelerator pedal being returned to its non-operated position. In this case, the erroneous execution of such a control would cause undesirable racing of the engine, i.e., a rise of the engine speed in the released state of the clutch. On the other hand, if such a control fails to be executed when the clutch is placed in its engaged state, it would be impossible to alleviate a shock due to an abrupt acceleration or deceleration of the vehicle as a result of an abrupt change in the amount of operation of the accelerator pedal.

SUMMARY OF THE INVENTION

It is therefore a first object of the present invention to provide an apparatus for determining an operating state of a clutch provided in a motor vehicle, on the basis of an output signal provided by a clutch switch of the vehicle, which apparatus facilitates reliable execution of a control program required for the motor vehicle. This first object may be achieved according to any one of first through eighth aspects of the invention which are described below.

It is a second object of the invention to provide an engine controller equipped with the above-described apparatus. This second object may be achieved according to ninth or tenth aspect of the invention which is described below.

The first aspect of this invention provides an apparatus for determining an operating state of a clutch of a vehicle, comprising: (a) a clutch switch for detecting an amount of operation of a clutch pedal, which is operable by an operator of the vehicle so as to operate the clutch of the vehicle; (b) clutch-pedal-operation determining means for determining whether the clutch pedal has been operated, on the basis of an output signal provided by the clutch switch; (c) accelerator-pedal-non-operation determining means for determining whether an accelerator pedal is placed in a non-operated state thereof; (d) low-engine-speed determining means for determining whether an operating speed of an engine of the vehicle is equal to or lower than a predetermined speed threshold; and clutch-state determining means for determining the operating state of the clutch on the basis of at least determinations respectively made by the clutch-pedal-operation determining means, the accelerator-pedal-non-operation determining means and the low-engine-speed determining means, wherein the clutch-operating-state determining means determines that the clutch is placed in an engaged state thereof, if a predetermined condition is satisfied when it is determined by the clutch-pedal-operation determining means that the clutch pedal has been operated, and wherein the predetermined condition includes at least an affirmative determination by the accelerator-pedal-non-operation determining means that the accelerator pedal is placed in the non-operated state and an affirmative determination by the low-engine-speed determining means that the operating speed of the engine is equal to or lower than the predetermined speed threshold.

In the apparatus constructed according to the first aspect of the invention, the clutch-state determining means determines that the clutch is placed in its engaged state, if the predetermined condition is satisfied when the clutch-pedal-operation determining means determines that the clutch has been operated, wherein the predetermined condition includes at least the affirmative determination by the accelerator-pedal-non-operation determining means that the accelerator pedal is placed in its non-operated state, and the affirmative determination by the low-engine-speed determining means that the operating speed of the engine is equal to or lower than the predetermined speed threshold. In this arrangement, the determination that the clutch is placed in its engaged state is made only in a running state in which the vehicle should be subject to a predetermined control, e.g., the above-described fuel-injection-quantity gradual-change control. In other words, it is determined that the clutch is still held in its released state except only in the running state in which the vehicle should be subject to the predetermined control, thereby making it possible to properly execute the predetermined control, without the vehicle suffering from a problematic surging or shock due to the incoincidence of the activation of the clutch switch, i.e., the switching action of the clutch switch between its ON and OFF states with respect to the actual switching of the clutch between its engaged and released states. For example, where it is determined that the clutch has been operated with the vehicle operator's foot being just put on the clutch pedal in preparation for a rapid releasing operation of the clutch during a cornering run of the vehicle along a curve, the clutch-state determining means determines that the clutch is placed in its engaged state, provided that the engine operating speed is not higher than the predetermined speed threshold and that the accelerator pedal is not operated. In such a case where the clutch is determined to be placed in its engaged state, the fuel-injection-quantity gradual-change control can be continued so that the quantity of the injected fuel is gradually or smoothly reduced with a certain degree of delay with respect to a reduction in the operation amount of the accelerator pedal, whereby a so-called "engine brake" is smoothly applied to the vehicle.

According to the second aspect of the invention, the apparatus defined in the first aspect of the invention further comprises time-lapse determining means for determining whether a time lapse after a moment of the determination by the clutch-pedal-operation determining means that the clutch pedal has been operated has exceeded a predetermined time, wherein the predetermined condition further includes an affirmative determination by the time-lapse determining means that the time lapse has exceeded the predetermined time. In the apparatus of this second aspect of the invention, it is not determined by the clutch-state determining means that the clutch is placed in its engaged state, while the time lapse after the moment of the activation of the clutch switch is still not larger than the predetermined time, namely, while the operating state of the clutch is still unstable. Thus, this arrangement is effective to further improve the reliability of the determination by the clutch-state determining means that the clutch is placed in its engaged state. Further, this arrangement is also effective to avoid execution of the fuel-injection-quantity gradual-change control shortly after the activation of the clutch switch, thereby preventing a racing of the engine, i.e., a rise of the engine speed in the released state of the clutch, which would be caused by the delay of the injection of fuel under the fuel-injection-quantity gradual-change control.

According to the third aspect of the invention, the apparatus defined in the first or second aspect of the invention further comprises low-vehicle-velocity determining means for determining whether a running velocity of the vehicle is equal to or lower than a predetermined velocity threshold, wherein the predetermined condition further includes an affirmative determination by the low-vehicle-velocity determining means that the running velocity of the vehicle is equal to or lower than a predetermined velocity threshold. In the apparatus of this third aspect of the invention, it is not determined by the clutch-state determining means that the clutch is placed in its engaged state, while the running velocity of the vehicle is higher than the predetermined velocity threshold, namely, while a surging of the vehicle does not provide a serious problem. That is, in this apparatus, the determination that the clutch is placed in its engaged state is not made except when the vehicle is running at a relatively low velocity, i.e., when a surging of the vehicle is more problematic than when the vehicle is running at a relatively high velocity.

According to the fourth aspect of the invention, the apparatus defined in any one of the first through third aspects of the invention further comprises ratio-hold determining means for determining whether a current value of ratio of the running velocity of the vehicle to the operating speed of the engine is held in a predetermined range, which has an intermediate value corresponds to a value of the ratio upon switching action of the clutch switch between ON and OFF states thereof, wherein the predetermined condition further includes an affirmative determination by the ratio-hold determining means that the current value of ratio is held in the predetermined range. In the apparatus of this fourth aspect of the invention, it is not determined by the clutch-state determining means that the clutch is placed in its engaged state, when the ratio of the vehicle running velocity to the engine operating speed is considerably changed, namely, when the transmission is obviously not placed in any one of positions for transmitting a drive force from the engine toward wheels of the vehicle. That is, in this apparatus, the determination that the clutch is placed in its engaged state is not made except when the transmission is placed in one of the positions for transmitting the drive force from the engine toward the wheels.

The fifth aspect of this invention provides an apparatus for determining an operating state of a clutch of a vehicle, comprising: (a) a clutch switch for detecting an amount of operation of a clutch pedal, which is operable by an operator of the vehicle so as to operate the clutch of the vehicle; (b) clutch-pedal-operation determining means for determining whether the clutch pedal has been operated, on the basis of an output signal provided by the clutch switch; (c) accelerator-pedal-non-operation determining means for determining whether an accelerator pedal is placed in a non-operated state thereof; (d) low-engine-speed determining means for determining whether an operating speed of an engine of the vehicle is equal to or lower than a predetermined speed threshold; and (d) clutch-state determining means for determining the operating state of the clutch on the basis of at least determinations respectively made by the clutch-pedal-operation determining means, the accelerator-pedal-non-operation determining means and the low-engine-speed determining means, wherein the clutch-state determining means determines that the clutch is placed in a released state thereof, if a predetermined condition is not satisfied when it is determined by the clutch-pedal-operation determining means that the clutch pedal has been operated, and wherein the predetermined condition includes at least an affirmative determination by the accelerator-pedal-non-operation determining means that the accelerator pedal is placed in the non-operated state and an affirmative determination by the low-engine-speed determining means that the operating speed of the engine is equal to or lower than the predetermined speed threshold.

In the apparatus constructed according to the fifth aspect of the invention, the clutch-state determining means determines that the clutch is placed in its released state, if the predetermined condition is not satisfied when the clutch-pedal-operation determining means determines that the clutch has been operated, wherein the predetermined condition includes at least the affirmative determination by the accelerator-pedal-non-operation determining means that the accelerator pedal is placed in its non-operated state, and the affirmative determination by the low-engine-speed determining means that the operating speed of the engine is equal to or lower than the predetermined speed threshold. In this arrangement, the determination that the clutch is placed in its released state is made when the vehicle should not be subject to a predetermined or desired control, e.g., the above-described fuel-injection-quantity gradual-change control. In other words, it is determined that the clutch is still held in its released state except only in the running state in which the vehicle should be subject to the predetermined control, thereby making it possible to properly execute the predetermined control, without the vehicle suffering from a surging or shock due to the incoincidence of the activation of the clutch switch, i.e., the i.e., the switching action of the clutch switch between its ON and OFF states with respect to the actual switching of the clutch between its engaged and released states.

According to the sixth aspect of the invention, the apparatus defined in the fifth aspect of the invention further comprises time-lapse determining means for determining whether a time lapse after a moment of the determination by the clutch-pedal-operation determining means that the clutch pedal has been operated has exceeded a predetermined time, wherein the predetermined condition further includes an affirmative determination by the time-lapse determining means that the time lapse has exceeded the predetermined time. In the apparatus of this sixth aspect of the invention, it is determined by the clutch-state determining means that the clutch is placed in its released state, while the time lapse after the moment of the activation of the clutch switch is still not larger than the predetermined time, namely, while the operating state of the clutch is still unstable. By determining that the clutch is placed in its released state rather than in its engaged state while the above-described time lapse is still not larger than the predetermined time, it is possible to avoid execution of the fuel-injection-quantity gradual-change control while the operating state of the clutch is unstable, thereby preventing a surging of the vehicle.

According to the seventh aspect of the invention, the apparatus defined in the fifth or sixth aspect of the invention further comprises low-vehicle-velocity determining means for determining whether a running velocity of the vehicle is equal to or lower than a predetermined velocity threshold, wherein the predetermined condition further includes an affirmative determination by the low-vehicle-velocity determining means that the running velocity of the vehicle is equal to or lower than a predetermined velocity threshold. In the apparatus of this seventh aspect of the invention, it is determined by the clutch-state determining means that the clutch is placed in its released state, while the running velocity of the vehicle is higher than the predetermined velocity, namely, while the vehicle is free from a problematic surging. That is, in this apparatus, when the vehicle is running at a relatively high velocity at which the vehicle is free from a surging, it is determined that the clutch is placed in its released state rather than in its engaged state, for convenience of a proper controlling of the vehicle.

According to the eighth aspect of the invention, the apparatus defined in any one of the fifth through seventh aspects of the invention further comprises ratio-hold determining means for determining whether a current value of ratio of the running velocity of the vehicle to the operating speed of the engine is held in a predetermined range, which has an intermediate value corresponds to a value of the ratio upon switching action of the clutch switch between ON and OFF states thereof, wherein the predetermined condition further includes an affirmative determination by the ratio-hold determining means that the current value of ratio is held in the predetermined range. In the apparatus of this eighth aspect of the invention, it is determined by the clutch-state determining means that the clutch is placed in its released state, when the ratio of the vehicle running velocity to the engine operating speed is considerably changed, namely, when the transmission is obviously not placed in any one of positions for transmitting a drive force from the engine toward wheels of the vehicle. That is, in this apparatus, when a drive-force transmitting path between the engine and the wheels is disconnected, it is determined that the clutch is placed in its released state rather than in its engaged state, for convenience of a proper controlling of the vehicle.

The ninth aspect of this invention provides an engine controller of a vehicle, comprising: the apparatus defined in any one of the first through eighth aspects of the invention; fuel-injection-quantity controlling means for changing a quantity of fuel to be supplied to the engine, in response to a change in an operating amount of the accelerator pedal, such that the quantity is changed with a certain degree of delay with respect to the change in the operating amount of the accelerator pedal; and delay-degree determining means for determining the degree of delay of the change in the quantity with respect to the change in the operating amount of the accelerator pedal, on the basis of the operating state of the clutch which is determined by the clutch-state determining means.

Where the quantity of fuel to be supplied to the engine is changed according to an equation representative of a target relationship between the quantity of the supplied fuel and the operating amount of the accelerator pedal, the above-described degree of delay can be changed, for example, by changing a parameter contained in the equation.

According to the tenth aspect of the invention, in the engine controller defined in ninth aspect of the invention, the delay-degree changing means determining the degree of delay such that the degree of delay is smaller where it is not determined that the clutch is placed in the engaged state, than where it is determined that the clutch is placed in the engaged state. In the engine controller of this tenth aspect of the invention, when the clutch is placed in its released state for achieving a gear shift operation in which the operating speed of the engine should be kept to be high or increased in response to the operating amount of the accelerator pedal, the degree of delay is made relatively small as a result of absence of the determination that the clutch is placed in its engaged state, so that the engine operating speed can be kept to be high or increased according to the intention of the vehicle operator. Further, owing to the arrangement in which the degree of delay is made relatively small during the released state of the clutch, a rise of the engine speed in the released state of the clutch, which rise would be caused by the delay of the injection of fuel, can be prevented when the clutch is placed in its released state after the accelerator pedal has been returned to its non-operated state.

BRIEF DESCRIPTION OF THE DRAWINGS

The above and other objects, features, advantages and technical and industrial significance of this invention will be better understood by reading the following detailed description of the presently preferred embodiment of the invention, when considered in connection with the accompanying drawings, in which:

Fig. 1 is a schematic view of a vehicle drive system including an electronic engine-controller equipped with a clutch-state determining apparatus which is constructed according to one embodiment of this invention;

Fig. 2 is a view showing a clutch provided in the vehicle drive system of Fig. 1, and also a clutch pedal operable by a vehicle operator so as to operate the clutch;

Fig. 3 is a block diagram illustrating a vehicle control system for controlling an engine and a transmission of the vehicle drive system of Fig. 1;

Fig. 4 is a block diagram illustrating various functional means incorporated in the electronic engine-controller shown in Fig. 3;

Fig. 5 is a graph indicating a chronological change in the actual quantity of a fuel supplied to the engine under the execution of a fuel-injection-quantity gradual-change control by fuel-injection-quantity controlling means shown in Fig.4;

Fig. 6 is a graph indicating a chronological change in the quantity of the supplied fuel controlled by the fuel-injection-quantity gradual-change control, together with chronological changes in the operation amount of an accelerator pedal and in an output signal provided by a clutch switch; and

Fig. 7 is a flow chart illustrating a control routine which is executed by the electronic engine-controller shown in Fig. 3.

## DETAILED DESCRIPTION OF THE PREFERRED EMBODIMENT

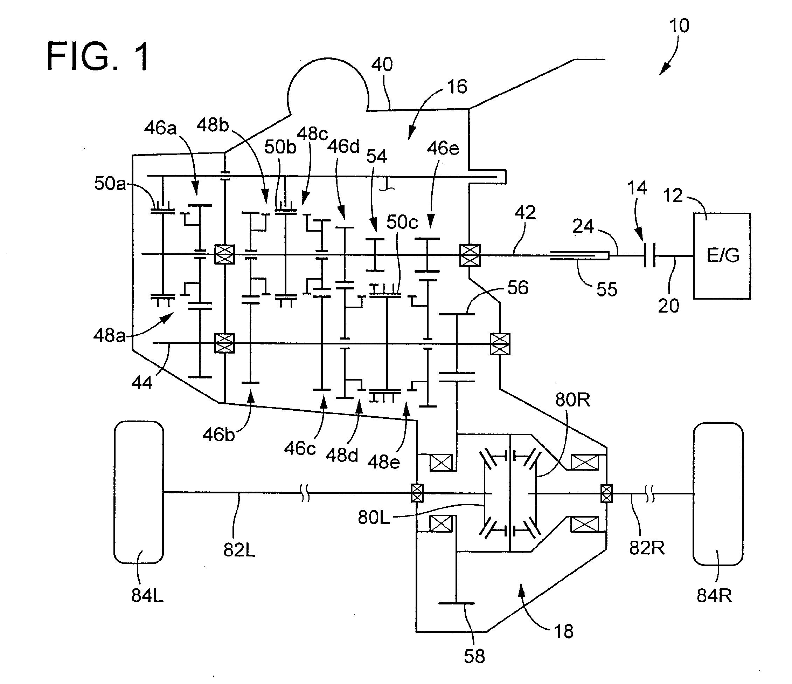

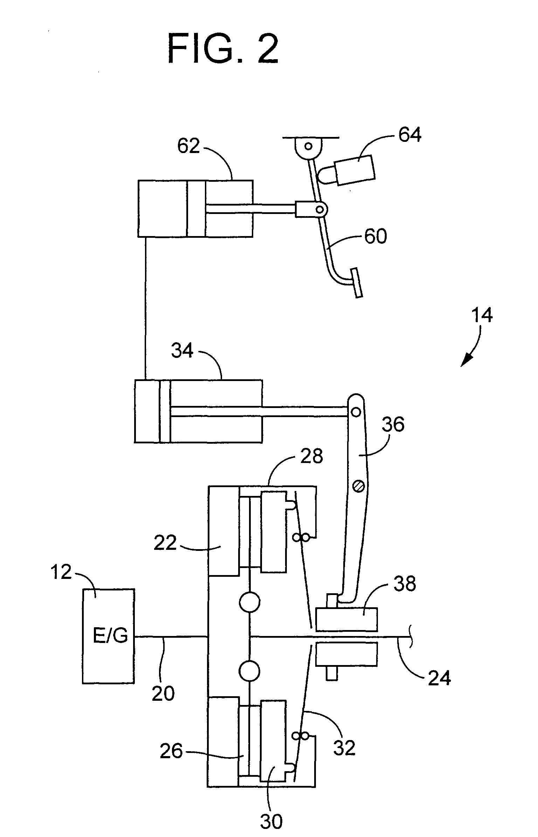

Referring first to the schematic view of Fig. 1, there is shown a drive system (power transmitting system) 10 of a front-engine front-drive (FF) vehicle or a midship-engine rear-drive (MR) vehicle. The power transmitting system 10 includes a drive power source in the form of an engine 12, a clutch 14, a transmission 16 and a differential gear device 18. The clutch 14 is operable to selectively connect and disconnect the engine 12 and the transmission 16 to and from each other. The clutch 14, which is a dry single-disc type friction clutch as shown in Fig. 2, includes: a flywheel 22 attached to a crankshaft 20 of the engine 12; an output shaft 24; a clutch disc 26 fixed to the output shaft 24; a clutch housing 28; a pressure plate 30 fixed to the clutch housing 28; a diaphragm spring 32 which biases the pressure plate 30 toward the flywheel 22, for forcing the pressure plate 30 onto the clutch disc 26, so as to thereby transmit a drive power source from the crankshaft 20 to the output shaft 24. The clutch 14 further includes: a clutch release cylinder 34; a release fork 36; and a release sleeve 38 which is to be displaced in the leftward direction (as seen in Fig. 2) by the clutch release cylinder 34 through the release fork 36. The displacement of the release sleeve 38 in the leftward direction causes the radially inner portion of the diaphragm spring 32 to be displaced in the leftward direction, for thereby reducing a load acting on the pressure plate 30, whereby the clutch 14 is placed in its released state. The engine 12 is a direct-injection type engine, such as a diesel engine and a lean-burn engine, in which a light oil or gasoline is directly injected into cylinders of the engine.

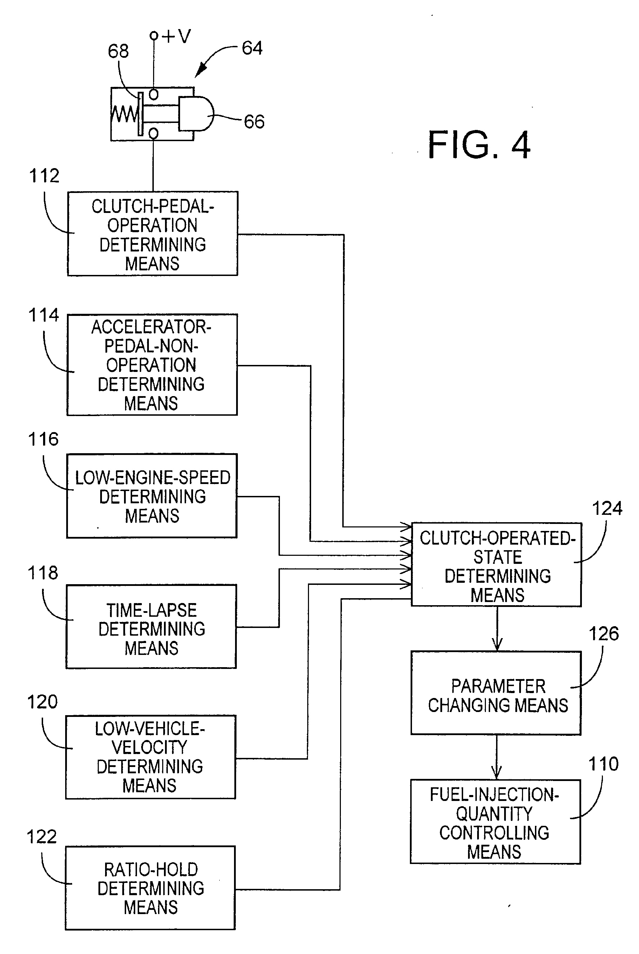

The clutch 14 further includes a clutch master cylinder 62, which is operatively associated to a clutch pedal 60 provided in a driver's or passengers' compartment of the vehicle, and which is connected to the clutch release cylinder 34. The clutch release cylinder 34 and the clutch master cylinder 62 are activated by an operation of the clutch pedal 60 whereby the clutch 14, which is normally held in its engaged state, is placed in its released. A clutch switch 64 is provided to be positioned in a predetermined position relative to the clutch pedal 60, such that the clutch switch 64 is brought into contact with the clutch pedal 60 when the clutch pedal 60 is returned to its home or non-operated position. The clutch switch 64 serves to detect an amount of operation of the clutch pedal 60, and includes a switch body 65; a contact plunger 66 which is slidably accommodated in the switch body 65 and which is to be brought into contact with the clutch pedal 60, and a make-break contact 68 which is opened and closed by the operation of the clutch pedal 60, as shown in Fig. 4. When the clutch pedal 60 is returned to its non-operated position, the contact plunger 66 is forced to be displaced inwardly of the switch body 65 (in the leftward direction as seen in Fig. 4), whereby the contact 68 is opened. When the clutch pedal 60 is depressed to be pivoted away from its non-operated position toward its operated position, the contact plunger 66 is retuned to its home position by a coil spring which biases the contact plunger 66 outwardly of the switch body 65, whereby the contact 68 is closed. That is, the clutch switch 64 is turned OFF when the clutch pedal 60 is returned to its non-operated position, and is turned ON when the clutch pedal 60 is depressed to be pivoted away from its non-operated position.

Referring back to the schematic view of Fig. 1, the transmission 16 is disposed in a housing 40, together with the differential gear device 18, so that the transmission 16 and the differential gear device 18 constitute a part of a trans-axle unit of the vehicle. The transmission 16 and the differential gear device 18 are lubricated by a bath of an oil in the housing 40. The transmission 16 includes: (a) a speed changing mechanism of two-axes type including a pair of input and output shafts 42, 44 which are parallel to each other, five sets of shift gears 46a-46e having respective different gear ratios, and five coupling or dog clutches 48a-48e; and (b) a shift-and-select shaft (not shown) for selectively shifting three clutch hub sleeves 50a, 50b, 50c of the dog clutched 48a-48e, so as to place the transmission 16 in one of five forward drive positions. Each of the five sets of gears 46a-46e consists of a driving gear and a driven gear which constantly mesh with each other and which are mounted on the respective input and output shafts 42, 44. The five dog clutches 48a-48e, each of which is of a synchro-mesh type, are provided for the five sets of shift gears 46a-46e, respectively. The speed changing mechanism of the transmission 16 further includes a set of rear-drive gears 54 consisting of two gears mounted on the respective input and output shafts 42, 44. The rear-drive gears 54 are brought in mesh with a rear-drive idler gear mounted on a countershaft (not shown), for establishing a rear-drive position of the transmission 16. The input shaft 42 is connected to the output shaft 24 of the clutch 14 through a spline connection 55, while the output shaft 44 has an output gear 56 which meshes with a ring gear 58 of the differential gear device 18.

The clutch hub sleeve 50a is provided for operative association with the dog clutch 48a, and the clutch hub sleeve 50b is provided for operative association with the dog clutches 48b and 48c, while the clutch hub sleeve 50c is provided for operative association with the dog clutches 48d and 48e. The shift-and-select shaft is disposed to be rotatable about its axis and movable in its axial direction. The shift-and-select shaft is moved by a select cylinder (not shown) in the axial direction so as to be selectively positioned in three axial positions, i.e., a first select position, a second select position and a third select position in which the shift-and-select shaft is brought engageable with the clutch hub sleeves 50c, 50b, 50a, respectively. The shift-and-select shaft is rotated about its axis by a shift cylinder (not shown) so as to be selectively positioned in three angular positions, i. e., a first shift position, a second shift position and a neutral position which is between the first and second shift positions. When the shift-and-select shaft is placed in its neutral position, the dog clutches 48a-48e are all placed in their released positions, as shown in Fig. 1, whereby any one of the five forward-drive and rear-drive positions of the transmission 16 is not established. Namely, the transmission of drive power between the input and output shafts 42, 44 is disconnected with the shift-and-select shaft being placed in the neutral position. When the shift-and-select shaft is rotated from the neutral position toward the first shift position, a selected one of the clutch hub sleeves 50a-50c is moved in the rightward direction as seen in Fig. 1. When the shift-and-select shaft is rotated from the neutral position toward the second shift position, a selected one of the clutch hub sleeves 50a-50c is moved in the leftward direction as seen in Fig. 1.

When the shift-and-select shaft is placed in the first select position and the first shift position, the dug clutch 48e is positioned in its engaged position so that the transmission 16 is placed in a first-speed forward drive position which has a highest speed ratio e which is represented by a ratio of an operating speed $N_{IN}$ (number of revolutions per unit time) of the input shaft 42 to an operating speed $N_{OUT}$ (number of revolutions per unit time) of the output shaft 44. When the shift-and-select shaft is placed in the first select position and the second shift position, the dug clutch 48d is positioned in its engaged position so that the transmission 16 is placed in a second-speed forward drive position which has a second highest speed ratio e. When the shift-and-select shaft is placed in the second select position and the first shift position, the dug clutch 48c is positioned in its engaged position so that the transmission 16 is placed in a third-speed forward drive position which has a third largest speed ratio e. When the shift-and-select shaft is placed in the second select position and the second shift position, the dug clutch 48b is positioned in its engaged position so that the transmission 16 is placed in a fourth-speed forward drive position which has a fourth largest speed ratio e that is substantially equal to one. When the shift-and-select shaft is placed in the third select position and the first shift position, the dug clutch 48a is positioned in its engaged position so that the transmission 16 is placed in a fifth-speed forward drive position which has a smallest speed ratio e. When the shift-and-select shaft is placed in the third select position and the second shift position, the transmission 16 is placed in the rear drive position.

It is noted that the differential gear device 18 is of a bevel gear type, including a pair of side gears 80R, 80L which are splined to respective drive shafts 82R, 82L for rotating right and left drive wheels (front or rear wheels) 84R, 84L.

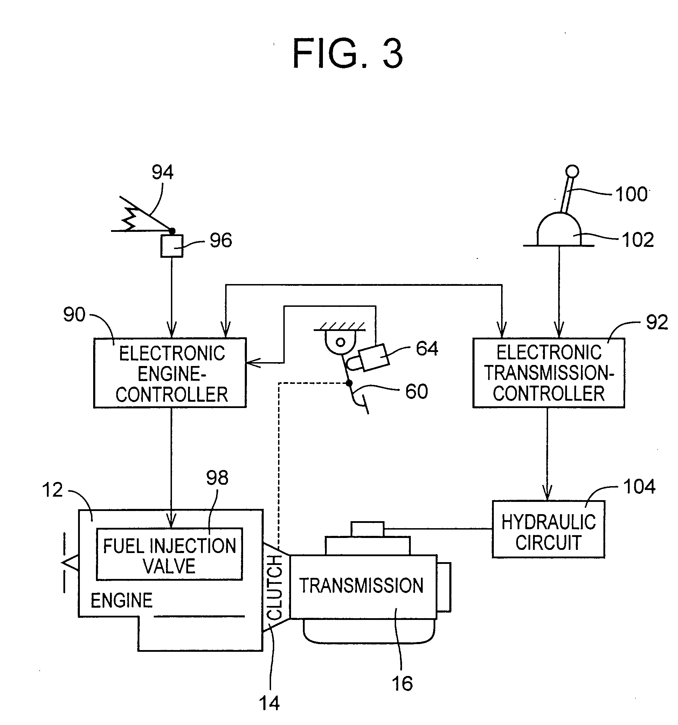

The engine 12 and the transmission 14 are controlled by a vehicle control system as shown in the block diagram of Fig. 3. The vehicle control system includes an electronic engine-controller 90 and an electronic transmission-controller 92, each of which is provided by a microcomputer incorporating a central processing unit (CPU), a random-access memory (RAM), a read-only memory (ROM) and an input and output interface. The CPU processes input signals according to control programs stored in the ROM while utilizing a temporary data storage function of the RAM, for performing various controls of the vehicle. The controller 90, 92 are capable of effecting data communications with each other through a communication line, such that appropriate signals requested by one of the controllers are transmitted from the other controller in response to a request received from the above-indicated one controller.

The electronic engine-controller 90 is connected to not only the above-described clutch switch 64 and an accelerator sensor 96 which respectively detects operating amounts of the clutch pedal 60 and an accelerator pedal 94, but also various other switches and sensors such as an ignition switch, an engine speed sensor, a vehicle running velocity sensor, an intake air quantity sensor, an intake air temperature sensor, a coolant temperature sensor, a neutral switch and a brake switch (which are not shown). The electronic engine-controller 90 is adapted to receive, from these switches and sensors, various output signals such as an operating amount of the clutch pedal 60, an operating amount $\theta_{ACC}$ of the accelerator pedal 94, an operating position of an ignition switch, an operating speed $N_E$ of the engine 12, a vehicle running velocity V (corresponding to an operating speed $N_{OUT}$ of the output shaft 44 of the transmission 16), an intake air quantity Q, an intake air temperature (outside air temperature) $T_A$, a temperature Tw of a coolant water of the engine 12, an operating position of the neutral switch and an operating position of the brake switch. The electronic engine-controller 90, receiving these various output signals, is adapted to effect various controls of the engine 12, such as a fuel injection control for controlling a fuel injection valve 98 of the engine 12 so as to control the quantity of fuel to be injected into the cylinders of the engine 12 and the point of time at which the fuel is to be injected into the cylinders of the engine 12, and an ignition timing control for controlling an igniter so as to control the point of time at which sparking plugs are ignited, such that the engine 12 generates a drive power reflecting the operating amount $\theta_{ACC}$ of the accelerator pedal 94. Further, the electronic engine-controller 90 executes a so-called fuel-injection-quantity gradual-change control. Since the engine 12 is of a direct-injection type in which the fuel is injected directly into the cylinders of the engine 12 from the fuel injection valve 98, the output of the engine 12 changes with a relatively high response to a change in the operating amount $\theta_{ACC}$ of the accelerator pedal 94, i.e., a change in the quantity of the fuel injected through the fuel injection valve 98 into the cylinders of the engine 12. The fuel-injection-quantity gradual-change control is effected for somewhat delaying the changing of the quantity of the injected fuel with respect to the changing of the operating amount $\theta_{ACC}$ of the accelerator pedal 94.

On the other hand, the electronic transmission-controller 92 is connected to not only a shift position sensor 102 which detects a currently selected one of operating positions of a shift lever 100, but also various other switches and sensors such as the ignition switch, the brake switch, a manual shift switch and an input-shaft speed sensor (which are not shown). The electronic transmission-controller 92 is adapted to receive, from these switches and sensors, various output signals such as a selected operating position $P_{SH}$ of the shift lever 100, the operating position of the ignition switch, the operating position of the brake switch and an operating speed $N_{IN}$ (number of revolutions per unit time) of the input shaft 42 of the transmission 16. The electronic transmission-controller 92 is adapted to receive these various output signals from the switches and sensors, and optionally receive the other output signals through the communication line from the electronic engine-controller 90 as needed, so as to control the operating states of the above-described respective select and shift cylinders which are included in a hydraulic circuit 104, for thereby placing the transmission 16 in a drive position corresponding to the selected operating position $P_{SH}$ of the shift lever 100.

Referring next to the block diagram of Fig. 4, there will be described the functions of various functional means provided in the electronic engine-controller 90. Fuel-injection-quantity controlling means 110 is provided for selectively executing a fuel-injection-quantity normal-change control and the above-described fuel-injection-quantity gradual-change control. In the fuel-injection-quantity normally changing control, a target quantity $Q_{fm}$ of the fuel to be injected into the cylinders of the engine 12 is determined on the basis of the detected operating amount $\theta_{ACC}$ of the accelerator pedal 94, and according to a relationship [$Q_f = f(\theta_{ACC})$], which is predetermined such that the fuel injection quantity is changed as a function of the operating amount $\theta_{ACC}$ of the accelerator pedal 94 whereby the vehicle is provided with an accelerating force which reflects a vehicle operator's intention of accelerating the vehicle. Thus, the target quantity $Q_{fm}$ of the injected fuel is changed in response to a change in the operating amount $\theta_{ACC}$ of the accelerator pedal 94. In the fuel-injection-quantity gradual-change control, on the other hand, an actual quantity $Q_f$ of the injected fuel is changed with a certain degree of delay with respect to a change in the above-described target quantity $Q_{fm}$ of the injected fuel which is determined as a function of the operating amount $\theta_{ACC}$ of the accelerator pedal 94. Described more specifically, a modified target value $Q_{fn}$ is repeatedly determined at a predetermined time interval, on the basis of a current value of the target fuel-injection quantity $Q_{fm}$, and according to the following equation (1):

$$Q_{fn} = G \cdot (Q_{fm} - Q_{fn-1}) + Q_{fn-1} \qquad (1)$$

wherein

$Q_{fn}$: currently determined modified-target quantity of the injected fuel
G: constant (parameter) (0 < G < 1)
$Q_{fm}$: current value of the target fuel-injection quantity
$Q_{fn-1}$: last determined modified-target quantity of the injected fuel

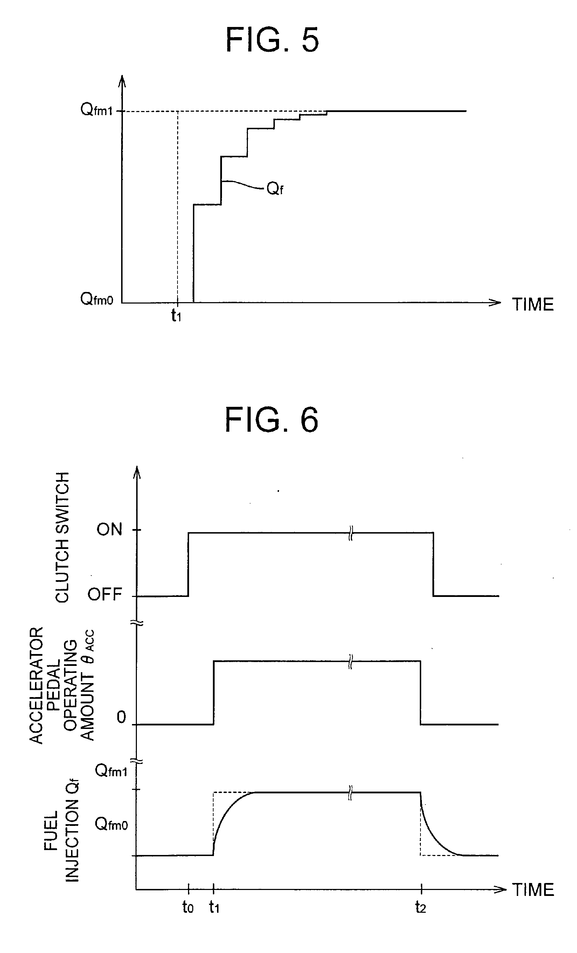

As is apparent from the above equation (1), the constant G corresponds to a gain or factor for determining a degree of the delay of the change in the actual quantity of the injected fuel with respect to the change in the target quantity of the injected fuel. The degree of the delay is reduced with an increase in the constant G, and is increased with a reduction in the constant G. It is noted that the constant G is larger than zero and smaller than one. Fig. 5 is a graph indicating a chronological change in the actual quantity $Q_f$ of the injected fuel from the point of time $t_1$ under execution of the fuel-injection-quantity gradual-change control when the constant G is set to be 0.5 (G = 0.5).

In a specific example shown in the graph of Fig. 6, in which the clutch pedal 60 is operated to be returned to its home or non-operated position after the completion of shift-up or shift-down operation of the transmission 16, and the accelerator pedal 94 is then depressed for accelerating the vehicle at the point of time $t_1$, the actual quantity $Q_f$ of the injected fuel is controlled by the fuel-injection-quantity controlling means 110, so as to start to be gradually increased at the point of time $t_1$. The actual quantity $Q_f$ of the injected fuel is then controlled so as to start to be gradually reduced at the point of time $t_2$ at which the accelerator pedal 94 is returned to its non-operated position for decelerating the vehicle.

Clutch-pedal-operation determining means 112 is provided for determining whether the clutch pedal 60 has been depressed or not, on the basis of the output signal provided by the clutch switch 64, namely, whether the clutch pedal 60 has been operated to be displaced in such a direction that causes the clutch 14 to be placed in its released state. Acceleration-pedal-non-operation determining means 114 is provided for determining whether the accelerator pedal 94 is currently placed in its non-operated position, that is, whether the operating amount $\theta_{ACC}$ of the accelerator pedal 94 detected by the accelerator sensor 96 is currently equal to or smaller than a predetermined operating amount threshold $\theta_1$

which is substantially zero. Low-engine-speed determining means 116 is provided for determining whether the operating speed $N_E$ of the engine 12 is currently equal to or lower than a predetermined speed threshold $N_{E1}$ which is substantially equal to an idling speed of the engine 12. Time-lapse determining means 118 is provided for determining whether a time lapse $t_{EL}$ after a moment of the determination by the clutch-pedal-operation determining means 112 that the clutch pedal 60 has been depressed or operated has exceeded a predetermined time $\alpha$. Low-vehicle-velocity determining means 120 is provided for determining whether the running velocity V of the vehicle is currently equal to or lower than a predetermined velocity threshold $V_1$. Ratio-hold determining means 122 is provided for determining whether a current value of ratio $V/N_E$ of the running velocity V of the vehicle to the operating speed $N_E$ of the engine 12 is held in a predetermined range $A_{1min}$-$A_{1max}$. It is noted that an intermediate value of the predetermined range $A_{1min}$-$A_{1max}$ corresponds to a value $A_1$ of the ratio at a moment of the activation of the clutch switch 64 upon transition or switching action of the clutch switch 64 between its ON and OFF states. Namely, an average value of the lower and upper limits $A_{1min}$, $A_{1max}$ of the predetermined range $A_{1min}$-$A_{1max}$ corresponds to the value $A_1$ of the ratio upon the switching action of the clutch switch 64 between its ON and OFF states in the operation of the clutch pedal 60.

The above-described predetermined operating amount threshold $\theta_1$, predetermined speed threshold $N_{E1}$, predetermined time $\alpha$, predetermined velocity threshold $V_1$ and predetermined range $A_{1min}$-$A_{1max}$ are set to such values that make it possible to determine that the clutch 14 is placed in its engaged state, for example, when the clutch pedal 60 has been operated for a shift-up operation of the transmission 16 during a cornering running of the vehicle along a curve. The predetermined time $\alpha$ is determined such that it can be considered that the clutch 14 has not been placed in its engaged state while the above-described time lapse $t_{EL}$ has not exceeded the predetermined time $\alpha$. In other words, the predetermined time $\alpha$ is set to such a value that makes it possible to determine that the clutch 14 has not been placed in its engaged state before the predetermined time $\alpha$ has passed since the clutch switch 64 had been turned ON, for thereby preventing racing of the engine 12 due to execution of the fuel-injection-quantity gradual-change control shortly after the clutch switch 64 has been turned ON, i.e., shortly after the clutch 14 has been placed in its released state. The predetermined speed threshold $N_{E1}$ is determined such that it can be considered that the operating speed $N_E$ of the engine 12 is held in a relatively high speed range in which the vehicle hardly suffers from an intolerable surging, provided the engine operating speed $N_E$ is higher than the predetermined speed threshold $N_{E1}$, so that the clutch 14 can be determined to have not been placed in its engaged state while the engine operating speed $N_E$

is held in the relatively high speed range, i.e., while a surging of the vehicle does not provide a serious problem. The predetermined velocity threshold $V_1$ is determined such that it can be considered that the vehicle running velocity V is held in a relatively high velocity range in which the vehicle hardly suffers from an intolerable surging, provided the vehicle running velocity V is higher than the predetermined velocity threshold $V_1$, so that the clutch 14 can be determined to have not been placed in its engaged state while the vehicle running velocity V is held in the relatively high velocity range, i.e., while a surging of the vehicle does not provide a serious problem. The predetermined range $A_{1min}$-$A_{1max}$ is determined such that it can be determined whether the clutch 14 is currently placed in its engaged state or not, depending upon whether the current value of ratio $V/N_E$ of the vehicle running velocity V to the engine operating speed $N_E$ is held in the predetermined range $A_{1min}$-$A_{1max}$ or not, so that the clutch 14 can be determined to have been placed in its engaged state while the value of the ratio $V/N_E$ is not considerably changed. The predetermined operating amount threshold $\theta_1$ is set be substantially zero so that the engine operating speed $N_E$ is increased with a relatively high response to an increase in the operating amount $\theta_{ACC}$ of the accelerator pedal 94 during the released state of the clutch 14 except when the operating amount $\theta_{ACC}$ of the accelerator pedal 94 is completely zero.

Clutch-state determining means 124 is provided for determining the operating state of the clutch 14 on the basis of determinations respectively made by the above-described clutch-pedal-operation determining means 112, accelerator-pedal-non-operation determining means 114, low-engine-speed determining means 116, time-lapse determining means 118, low-vehicle-velocity determining 120 and ratio-hold determining means 122. The clutch-state determining means 124 is adapted to determine that the clutch 14 is placed in its engaged state, if a predetermined condition is satisfied when it is determined by the clutch-pedal-operation determining means 112 that the clutch pedal 60 has been operated. The predetermined condition includes: (a) an affirmative determination by the accelerator-pedal-non-operation determining means 114 that the accelerator pedal 94 is placed in its non-operated state; (b) an affirmative determination by the low-engine-speed determining means 116 that the operating speed $N_E$ of the engine 12 is equal to or lower than the predetermined speed threshold $N_{E1}$; (c) an affirmative determination by the time-lapse determining means 118 that the time lapse $t_{EL}$ after the moment of the above-described determination by the clutch-pedal-operation determining means 112 that the clutch pedal 60 has been operated has exceeded a predetermined time $\alpha$; (d) an affirmative determination by the low-vehicle-velocity determining means 120 that the running velocity V of the vehicle is equal to or lower than the predetermined velocity threshold $V_1$; and (e) an affirmative determination by the ratio-hold determining means 122 that the current value of ratio $V/N_E$ of the running velocity V of the vehicle to the operating speed $N_E$ of the engine 12 is held in the predetermined range $A_{1min}$-$A_{1max}$ whose intermediate value corresponds to the value $A_1$ of the ratio upon switching action of the clutch switch 64 between its ON and OFF states.

The clutch-state determining means 124 is also adapted to determine that the clutch 14 is placed in its released state rather than in its engaged state, if the above-described predetermined condition is not satisfied when it is determined by the clutch-pedal-operation determining means 112 that the clutch pedal 60 has been operated. In other words, the clutch-state determining means 124 determines that the clutch 14 is placed in its released state, if the accelerator pedal 94 is determined to be not placed in its non-operated state, or if the operating speed $N_E$ of the engine 12 is determined to be not equal to or lower than the predetermined speed threshold $N_{E1}$, or if the time lapse $t_{EL}$ is determined to have not exceeded the predetermined time $\alpha$, or if the running velocity V of the vehicle is determined to be not equal to or lower than the predetermined velocity threshold $V_1$, or if the current value of ratio $V/N_E$ of the vehicle running velocity V to the engine operating speed $N_E$ is determined to be not held in the predetermined range $A_{1min}$-$A_{1max}$, when it is determined that the clutch pedal 60 has been operated. It is noted that the clutch-state determining apparatus of this embodiment of the invention is principally constituted by the clutch-pedal-operation determining means 112, accelerator-pedal non-operation determining means 114, low-engine-speed determining means 116, time-lapse determining means 118, low-vehicle-velocity determining means 120, ratio-hold determining means 122 and clutch-state determining means 124.

Parameter changing means 126 is provided for changing the value of the constant G of the above-described equation (1) of the fuel-injection-quantity gradual-change control, depending upon whether the clutch 14 is determined to be placed in its released state or engaged state. When it is determined by the clutch-state determining means 124 that the clutch 14 is not placed in its engaged state, namely, that the clutch 14 is placed in its released state, the value of the constant G of the equation (1) is increased, whereby the operating speed $N_E$ of the engine 12 is changed with a relatively high response to the change in the operating amount $\theta_{ACC}$ of the accelerator pedal 94, for thereby reducing the degree of the delay of the change in the engine operating speed $N_E$ with respect to the change in the operating amount $\theta_{ACC}$ of the accelerator pedal 94. On the other hand, when it is determined by the clutch-state determining means 124 that the clutch 14 is placed in its engaged state, the value of the constant G of the equation (1) is reduced for thereby increasing the degree of the delay of the change in the engine operating speed $N_E$ with respect to the change in the operating amount $\theta_{ACC}$

of the accelerator pedal 94, so as to alleviate shock due to an abrupt acceleration or deceleration of the vehicle. The parameter changing means 126 may be interpreted to correspond to delay-degree determining means for determining the degree of delay of the change in the fuel injection quantity $Q_f$ with respect to the operating amount $\theta_{ACC}$ of the accelerator pedal 94, on the basis of the operating state of the clutch 14 which is determined by the clutch-operated state determining means 124.

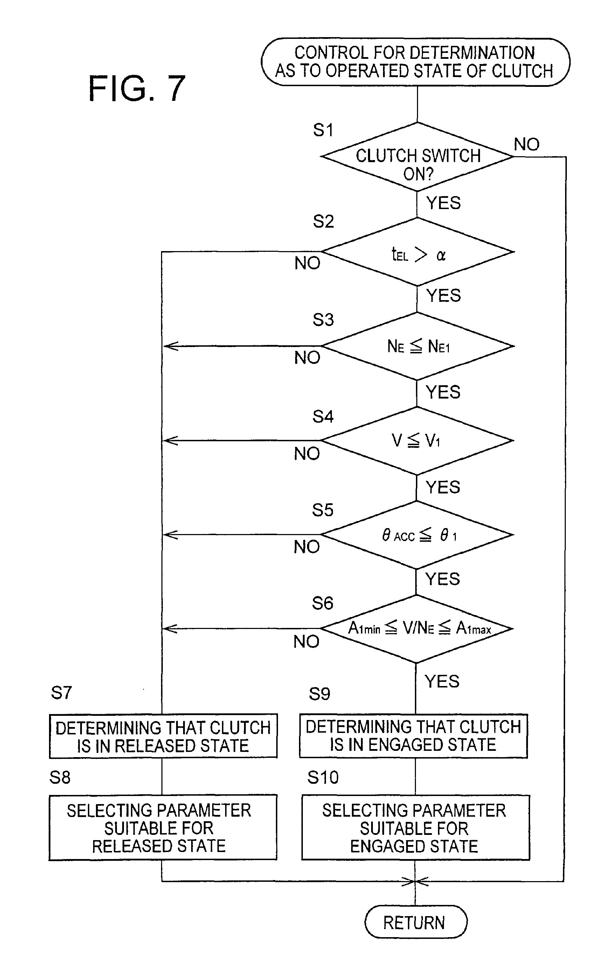

Referring next to the flow chart of Fig. 7, there will be described a control routine executed by the electronic engine-controller 90. The control routine of Fig. 7 is initiated by step S1 which is implemented by the clutch-pedal-operation determining means 112 to determine whether the clutch pedal 60 has been operated, on the basis of an output signal provided by the clutch switch 64. If a negative determination (NO) is obtained in step S1, one cycle of execution of the present control routine is terminated. If an affirmative determination (YES) is obtained in step S1, the control flow goes to step S2 in which it is determined by the time-lapse determining means 118 whether the time lapse $t_{EL}$ after the moment of the affirmative determination by the clutch-pedal-operation determining means 112 that the clutch pedal 60 has been operated has exceeded the predetermined time $\alpha$. If a negative determination (NO) is obtained in step S2, the control flow goes to step S7 in which it is determined by the clutch-state determining means 124 that the clutch 14 is placed in its released state. Step S7 is followed by step S8 which is implemented by the parameter changing means 126 so as to select, as the parameter of the above-described equation (1), a value that is suitable for the released state of the clutch 14. Namely, a relatively large value is selected as the constant G of the equation (1).

If a affirmative determination (YES) is obtained in step S2, the control flow goes to step S3 which is implemented by the low-engine-speed determining means 116 to determine whether the operating speed $N_E$ of the engine 12 is currently equal to or lower than the predetermined speed threshold $N_{E1}$ that is substantially equal to an idling speed of the engine 12. If a negative determination (NO) is obtained in step S3, the control flow goes to steps S7 and S8, which are implemented as described above. If a affirmative determination (YES) is obtained in step S3, the control flow goes to step S4 which is implemented by the low-vehicle-velocity determining means 120, S4 to determine whether the running velocity V of the vehicle is currently equal to or lower than the predetermined velocity threshold $V_1$. If a negative determination (NO) is obtained in step S4, the control flow goes to steps S7 and S8. If a affirmative determination (YES) is obtained in step S4, the control flow goes to step S5 which is implemented by the acceleration-pedal-non-operation determining means 114 to determine whether the accelerator pedal 94 is currently placed in its non-operated position, that is, whether the

operating amount $\theta_{ACC}$ of the accelerator pedal 94 detected by the accelerator sensor 96 is currently equal to or smaller than the predetermined operating amount threshold $\theta_1$ which is substantially zero. If a negative determination (NO) is obtained in step S5, the control flow goes to steps S7 and S8. If a affirmative determination (YES) is obtained in step S5, the control flow goes to step S6 which is implemented by the ratio-hold determining means 122 to determine whether the current value of ratio $V/N_E$ of the vehicle running velocity V to the engine operating speed $N_E$ is held in the predetermined range $A_{1min}$-$A_{1max}$ whose intermediate value corresponds to the value $A_1$ of the ratio upon switching action of the clutch switch 64 between its ON and OFF states. If a negative determination (NO) is obtained in step S6, the control flow goes to steps S7 and S8. If a affirmative determination (YES) is obtained in step S6, the control flow goes to step S9 in which it is determined by the clutch-state determining means 124 that the clutch 14 is placed in its engaged state. Step S9 is followed by step S10 which is implemented by the parameter changing means 126 so as to select, as the parameter of the above-described equation (1), a value that is suitable for the engaged state of the clutch 14. Namely, a relatively small value is selected as the constant G of the equation (1).

In the clutch-state determining apparatus of the present embodiment of the invention, the clutch-state determining means 124 determines in step S9 that the clutch 14 is placed in its engaged state, if the predetermined condition is satisfied when it is determined by the clutch-pedal-operation determining means 112 in step S1 that the clutch 14 has been operated, wherein the predetermined condition includes at least the affirmative determination by the accelerator-pedal-non-operation determining means 114 in step S5 that the accelerator pedal 94 is placed in its non-operated state, and the affirmative determination by the low-engine-speed determining means 116 in step S3 that the operating speed $N_E$ of the engine 12 is equal to or lower than the predetermined speed threshold $N_{E1}$. The clutch-state determining means 124 determines in step S7 that the clutch 14 is placed in its released state, if the above-described predetermined condition is not satisfied when it is determined by the clutch-pedal-operation determining means 112 in step S1 that the clutch 14 has been operated. In this arrangement, the determination that the clutch 14 is placed in its engaged state is made only in a running state in which the vehicle should be subject to a predetermined control, e.g., the above-described fuel-injection-quantity gradual-change control. In other words, it is determined that the clutch 14 is still held in its released state except only in the running state in which the vehicle should be subject to the predetermined control, thereby making it possible to properly execute the predetermined control, without the vehicle suffering from a surging or shock due to the incoincidence of the activation of the clutch switch 64, i.e., the switching action of the clutch switch 64 between its ON and OFF states with respect to the actual switching of the clutch 14 between its engaged state and released state.

For example, where it is determined that the clutch 14 has been operated with the vehicle operator's foot being put on the clutch pedal 60 in preparation for a rapid releasing operation of the clutch 14 during a cornering running of the vehicle along a curve, the clutch-state determining means 124 determines that the clutch 14 is placed in its engaged state, provided that the engine operating speed $N_E$ is not higher than the predetermined speed threshold $N_{E1}$ and that the accelerator pedal 94 is not operated. In such a case where the clutch 14 is determined to be placed in its engaged state, the fuel-injection-quantity gradual-change control can be continued so that the quantity $Q_f$ of the injected fuel is gradually reduced with a certain degree of delay with respect to a reduction in the operation amount $\theta_{ACC}$ of the accelerator pedal 94, whereby a so-called "engine brake" is smoothly applied to the vehicle.

Further, in the clutch-state determining apparatus of the present embodiment of the invention, the time-lapse determining means 118 is provided for determining in step S2 whether the time lapse $t_{EL}$ after a moment of the determination by the clutch-pedal-operation determining means 112 in step S1 that the clutch pedal 60 has been operated has exceeded the predetermined time $\alpha$, wherein the above-described predetermined condition further includes the affirmative determination by the time-lapse determining means 118 that the time lapse $t_{EL}$ has exceeded the predetermined time $\alpha$. In this apparatus, therefore, it is not determined by the clutch-operating state determining means 124 that the clutch 14 is placed in its engaged state, while the time lapse $t_{EL}$ after the moment of the activation of the clutch switch 64 is still not larger than the predetermined time $\alpha$, namely, while the operating state of the clutch 14 is still unstable. Thus, this arrangement is effective to further improve the reliability of the determination by the clutch-state determining means 124 that the clutch 14 is placed in its engaged state. Further, this arrangement is also effective to avoid execution of the fuel-injection-quantity gradual-change control shortly after the activation of the clutch switch 64, thereby preventing a racing of the engine, i.e., a rise of the engine speed in the released state of the clutch 14, which would be caused by the delay of the injection of fuel under the fuel-injection-quantity gradual-change control.

The clutch-state determining means 124 determines in step S7 that the clutch 14 is placed in its released state, while the time lapse $t_{EL}$ after the moment of the activation of the clutch switch 64 is still not larger than the predetermined time $\alpha$, namely, while the operating state of the clutch 14 is still unstable. By determining that the clutch 14 is placed in its released state rather than in its engaged state while the above-described time lapse $t_{EL}$ is still not larger than the predetermined time $\alpha$, it is possible to avoid execution of the fuel-injection-quantity gradual-change control while the operating state of the clutch 14 is unstable, thereby preventing a surging of the vehicle.

Further, in the clutch-state determining apparatus of the present embodiment of the invention, the low-vehicle-velocity determining means 120 is provided for determining in step S4 whether the running velocity V of the vehicle is equal to or lower than the predetermined velocity threshold $V_1$, wherein the above-described predetermined condition further includes the affirmative determination by the low-vehicle-velocity determining means 120 that the running velocity V of the vehicle is equal to or lower than the predetermined velocity threshold $V_1$. In this apparatus, therefore, it is not determined by the clutch-state determining means 124 that the clutch 14 is placed in its engaged state, while the running velocity V of the vehicle is higher than the predetermined velocity threshold $V_1$, namely, while the vehicle is free from a problematic surging. That is, the determination that the clutch 14 is placed in its engaged state is not made except when the vehicle is running at a relatively low velocity, i.e., when a surging of the vehicle is more problematic than when the vehicle is running at a relatively high velocity. The clutch-state determining means 124 determines in step S7 that the clutch 14 is placed in its released state, while the running velocity V of the vehicle is higher than the predetermined velocity threshold $V_1$, namely, while the vehicle is free from a problematic surging. That is, in this apparatus, when the vehicle is running at a relatively high velocity at which the vehicle is free from a surging, it is determined that the clutch 14 is placed in its released state rather than in its engaged state, for convenience of a proper controlling of the vehicle.

Further, in the clutch-state determining apparatus of the present embodiment of the invention, the ratio-hold determining means 122 is provided for determining in step S6 whether the current value of ratio $V/N_E$ of the running velocity V of the vehicle to the operating speed $N_E$ of the engine 12 is held in the predetermined range $A_{1min}$-$A_{1max}$, which has an intermediate value corresponds to a value $A_1$ of the ratio upon switching action of the clutch switch 64 between ON and OFF states thereof, wherein the above-described predetermined condition further includes the affirmative determination by the ratio-hold determining means 122 that the current value of ratio $V/N_E$ is held in the predetermined range $A_{1min}$-$A_{1max}$. In this apparatus, therefore, it is not determined by the clutch-state determining means 124 that the clutch 14 is placed in its engaged state, when the ratio $V/N_E$ of the vehicle running velocity V to the engine operating speed $N_E$ is considerably changed, namely, when the transmission 16 is obviously not placed in any one of positions for transmitting a drive force from the engine 12 toward wheels of the vehicle. That is, in this apparatus, the determination that the clutch 14 is placed in its engaged state is not made unless the transmission 16 is placed in one of the positions for transmitting the drive force from the engine 12 toward the wheels. The clutch-state determining means 124 determines in step S7 that the clutch 14 is placed in its released state, when the ratio $V/N_E$ of the vehicle running velocity V to the engine operating speed $N_E$ is considerably changed, namely, when the transmission 16 is obviously not placed in any one of positions for transmitting a drive force from the engine 12 toward wheels of the vehicle. That is, in this apparatus, when a drive-force transmitting path between the engine 12 and the wheels is disconnected, it is determined that the clutch 14 is placed in its released state rather than in its engaged state, for convenience of a proper controlling of the vehicle.

The engine controller 90 is principally constituted by the clutch-state determining apparatus, the fuel-injection-quantity controlling means 110 and the parameter changing means 126. The fuel-injection-quantity controlling means 110 is provided for changing the quantity $Q_f$ of fuel to be supplied to the engine 12, in response to a change in the operating amount $\theta_{ACC}$ of the accelerator pedal 94, such that the quantity $Q_f$ is changed with a certain degree of delay with respect to the change in the operating amount $\theta_{ACC}$ of the accelerator pedal 94. The parameter changing means 126 is provided for serving as the delay-degree determining means for determining the degree of delay of the change in the quantity $Q_f$ with respect to the change in the operating amount $\theta_{ACC}$ of the accelerator pedal 94, on the basis of the operating state of the clutch 14 which is determined by the clutch-state determining means 124 in step S7 or step S9. In the above-illustrated embodiment in which the quantity $Q_f$ of fuel to be supplied to the engine 12 is changed according to the above-described equation (1) representative of a target relationship between the quantity $Q_f$ of the supplied fuel and the operating amount $\theta_{ACC}$ of the accelerator pedal 94, the above-described degree of delay can be changed by changing the value of the constant G as a parameter contained in the equation (1). The parameter changing means 126 provided for serving as the delay-degree determining means is adapted to determine the above-described degree of delay such that the degree of delay is smaller where it is not determined that the clutch 14 is placed in the engaged state, than where it is determined that the clutch 14 is placed in the engaged state. In the engine controller 90, when the clutch 14 is placed in its released state for achieving a gear shift operation in which the operating speed $N_E$ of the engine 12 should be kept to be high or increased in response to the pedal 60 is depressed to be pivoted away from its non-operated position rather than when the clutch pedal 60 is retuned to its non-operated position.

While the clutch 14 is operated by a hydraulic power which reflects an operating force applied to the clutch pedal 60 in the above-illustrated embodiment, the clutch 14 may be mechanically connected to the clutch pedal 60 through a cable or other operating-force transmitting member, so that the clutch 14 is mechanically operated by the clutch pedal 60.

While the clutch switch 64 consists of a switch which includes a contact plunger 66 to be brought into contact with the clutch pedal 60 in the above-illustrated embodiment, the clutch switch 64 may consist of a proximity switch which is adapted to be turned ON or OFF when it is brought into proximity with the clutch pedal 60.

In the above-illustrated embodiment, the clutch-state determining apparatus of the invention is incorporated in the electronic engine-controller 90 for controlling an quantity of fuel to be injected into the cylinders of the engine 12. However, the clutch-state determining apparatus of the invention may be incorporated in other kind of controller so that the controller can execute a predetermined control program on the basis of the determination as to the operating state of the clutch 14 which determination is made by the determining apparatus.

While the transmission 16 is placed in a desired drive position by activation of the select and shift cylinders which are operated by the shift lever 100 in the above-illustrated embodiment, the transmission 16 may be connected to the shift lever 100 through a cable or other linkage so that the transmission 16 is mechanically operated by the shift lever 100.

It is to be understood that the invention is not limited to the details of the illustrated embodiment, but may be embodied with various other changes, modifications and improvements, which may occur to those skilled in the art, without departing from the spirit and scope of the invention defined in the following claims.

An apparatus for determining an operating state of a clutch (14) of a vehicle, including: (a) a clutch switch (64) for detecting an amount of operation of a clutch pedal (60), (b) clutch-pedal-operation determining means (112, S1) for determining whether the clutch pedal has been operated, on the basis of an output signal provided by the clutch switch; (c) accelerator-pedal-non-operation determining means (114, S5) for determining whether an accelerator pedal (94) is placed in its non-operated state; (d) low-engine-speed determining means (116, S3) for determining whether an operating speed ($N_E$) of an engine (12) of the vehicle is equal to or lower than a predetermined speed threshold ($N_{E1}$); and (e) clutch-state determining means (124, S7, S9) for determining that the clutch is placed in its engaged state if a predetermined condition is satisfied when it is determined by the clutch-pedal-operation determining means that the clutch pedal has been operated, wherein the predetermined condition includes at least an affirmative determination by the accelerator-pedal-non-operation determining means that the accelerator pedal is placed in the non-operated state and an affirmative determination by the low-engine-speed determining means that the operating speed of the engine is equal to or lower than the predetermined speed threshold.

**Claims**

1. An apparatus for determining an operating state of a clutch (14) of a vehicle, comprising:

   a clutch switch (64) for detecting an amount of operation of a clutch pedal (60), which is operable by an operator of the vehicle so as to operate said clutch of the vehicle;
   clutch-pedal-operation determining means (112, S1) for determining whether said clutch pedal has been operated, on the basis of an output signal provided by said clutch switch;
   accelerator-pedal-non-operation determining means (114, S5) for determining whether an accelerator pedal (94) is placed in a non-operated state thereof;
   low-engine-speed determining means (116, S3) for determining whether an operating speed ($N_E$) of an engine (12) of the vehicle is equal to or lower than a predetermined speed threshold ($N_{E1}$); and
   clutch-state determining means (124, S7, S9) for determining said operating state of said clutch on the basis of at least determinations respectively made by said clutch-pedal-operation determining means, said accelerator-pedal-non-operation determining means and said low-engine-speed determining means,
   said apparatus being **characterized in that**:

      said clutch-state determining means determines that said clutch is placed in an engaged state thereof, if a predetermined condition is satisfied when it is determined by said clutch-pedal-operation determining means that said clutch pedal has been operated,

      wherein said predetermined condition includes at least an affirmative determination by said accelerator-pedal-non-operation determining means that said accelerator pedal is placed in said non-operated state and an affirmative determination by said low-engine-speed determining means that said operating speed of said engine is equal to or lower than said predetermined speed threshold.

2. An apparatus according to claim 1, further comprising time-lapse determining means (118, S2) for determining whether a time lapse ($t_{EL}$) after a moment of the determination by said clutch-pedal-operation determining means (112, S1) that said clutch pedal (60) has been operated has exceeded a predetermined time ($\alpha$), wherein said predetermined condition further includes an affirmative determination by said time-lapse determining means that said time lapse has exceeded said predetermined time.

3. An apparatus according to claim 1 or 2, further comprising low-vehicle-velocity determining means (120, S4) for determining whether a running velocity (V) of the vehicle is equal to or lower than a predetermined velocity threshold ($V_1$), wherein said predetermined condition further includes an affirmative determination by said low-vehicle-velocity determining means that said running velocity of the vehicle is equal to or lower than a predetermined velocity threshold.

4. An apparatus according to any one of claims 1-3, further comprising ratio-hold determining means (122, S6) for determining whether a current value of ratio ($V/N_E$) of said running velocity (V) of the vehicle to said operating speed ($N_E$) of said engine (12) is held in a predetermined range ($A_{1min}$-$A_{1max}$), which has an intermediate value corresponds to a value ($A_1$) of said ratio upon switching action of said clutch switch (64) between ON and OFF states thereof, wherein said predetermined condition further includes an affirmative determination by said ratio-hold determining means that said current value of ratio is held in said predetermined range.

5. An apparatus for determining an operating state of a clutch (14) of a vehicle, comprising:

a clutch switch (64) for detecting an amount of operation of a clutch pedal (60), which is operable by an operator of the vehicle so as to operate said clutch of the vehicle;
clutch-pedal-operation determining means (112, S1) for determining whether said clutch pedal has been operated, on the basis of an output signal provided by said clutch switch;
accelerator-pedal-non-operation determining means (114, S5) for determining whether an accelerator pedal (94) is placed in a non-operated state thereof
low-engine-speed determining means (116, S3) for determining whether an operating speed ($N_E$) of an engine (12) of the vehicle is equal to or lower than a predetermined speed threshold ($N_{E1}$); and
clutch-state determining means (124, S7, S9) for determining said operating state of said clutch on the basis of at least determinations respectively made by said clutch-pedal-operation determining means, said accelerator-pedal-non-operation determining means and said low-engine-speed determining means,
said apparatus being **characterized in that**:

said clutch-state determining means determines that said clutch is placed in a released state thereof, if a predetermined condition is not satisfied when it is determined by said clutch-pedal-operation determining means that said clutch pedal has been operated,

wherein said predetermined condition includes at least an affirmative determination by said accelerator-pedal-non-operation determining means that said accelerator pedal is placed in said non-operated state and an affirmative determination by said low-engine-speed determining means that said operating speed of said engine is equal to or lower than said predetermined speed threshold.

6. An apparatus according to claim 5, further comprising time-lapse determining means (118, S2) for determining whether a time lapse ($t_{EL}$) after a moment of the determination by said clutch-pedal-operation determining means (112, S1) that said clutch pedal (60) has been operated has exceeded a predetermined time ($\alpha$), wherein said predetermined condition further includes an affirmative determination by said time-lapse determining means that said time lapse has exceeded said predetermined time.

7. An apparatus according to claim 5 or 6, further comprising low-vehicle-velocity determining means (120, S4) for determining whether a running velocity (V) of the vehicle is equal to or lower than a predetermined velocity threshold ($V_1$), wherein said predetermined condition further includes an affirmative determination by said low-vehicle-velocity determining means that said running velocity of the vehicle is equal to or lower than a predetermined velocity threshold.

8. An apparatus according to any one of claims 5-7, further comprising ratio-hold determining means (122, S6) for determining whether a current value of ratio ($V/N_E$) of said running velocity (V) of the vehicle to said operating speed ($N_E$) of said engine (12) is held in a predetermined range ($A_{1min}$-$A_{1max}$), which has an intermediate value corresponds to a value ($A_1$) of said ratio upon switching action of said clutch switch (64) between ON and OFF states thereof, wherein said predetermined condition further includes an affirmative determination by said ratio-hold determining means that said current value of ratio is held in said predetermined range.

9. An engine controller (90) of a vehicle, comprising:

the apparatus defined in any one of claims 1-8;
fuel-injection-quantity controlling means (110) for changing a quantity ($Q_f$) of fuel to be supplied to said engine (12), in response to a change in an operating amount ($\theta_{ACC}$) of said accelerator pedal (94), such that said quantity is changed with a certain degree of delay with respect to the change in said operating amount of said accelerator pedal; and

delay-degree determining means (126, S8, S10) for determining the degree of delay of the change in said quantity with respect to the change in said operating amount of said accelerator pedal, on the basis of said operating state of said clutch (14) which is determined by said clutch-state determining means (124, S7, S9).

10. An engine controller according to claim 9, wherein said delay-degree changing means (126, S8, S10) determining said degree of delay such that said degree of delay is smaller where it is not determined that said clutch (14) is placed in the engaged state, than where it is determined that said clutch is placed in the engaged state.

FIG. 1

EP 1 217 242 A2

# FIG. 2

# FIG. 3

+V

68

64

66

FIG. 4

112 → CLUTCH-PEDAL-OPERATION DETERMINING MEANS

114 → ACCELERATOR-PEDAL-NON-OPERATION DETERMINING MEANS

116 → LOW-ENGINE-SPEED DETERMINING MEANS

118 → TIME-LAPSE DETERMINING MEANS

120 → LOW-VEHICLE-VELOCITY DETERMINING MEANS

122 → RATIO-HOLD DETERMINING MEANS

124 → CLUTCH-OPERATED-STATE DETERMINING MEANS

126 → PARAMETER CHANGING MEANS

110 → FUEL-INJECTION-QUANTITY CONTROLLING MEANS

# FIG. 5

# FIG. 6

# FIG. 7

```
        ┌──────────────────────────┐
        │  CONTROL FOR DETERMINATION │
        │ AS TO OPERATED STATE OF CLUTCH │
        └──────────────────────────┘
```

S1 CLUTCH SWITCH ON? — NO

YES

S2 $t_{EL} > \alpha$ — NO

YES

S3 $N_E \leqq N_{E1}$ — NO

YES

S4 $V \leqq V_1$ — NO

YES

S5 $\theta_{ACC} \leqq \theta_1$ — NO

YES

S6 $A_{1min} \leqq V/N_E \leqq A_{1max}$ — NO

YES

S7 DETERMINING THAT CLUTCH IS IN RELEASED STATE

S9 DETERMINING THAT CLUTCH IS IN ENGAGED STATE

S8 SELECTING PARAMETER SUITABLE FOR RELEASED STATE

S10 SELECTING PARAMETER SUITABLE FOR ENGAGED STATE

RETURN